# EUROPEAN PATENT APPLICATION

(11) **EP 3 324 023 A1**
(43) Date of publication of application: **23.05.2018**
(21) Application number: 17202107.3
(22) Date of filing: 16.11.2017
(51) Int. Cl.: F02C 9/28

(54) **SYSTEMS AND METHODS FOR ADAPTIVE FUEL DISTRIBUTION IN FUEL CIRCUITS**

(30) Priority: 17.11.2016 US 201615354801
(71) Applicant: General Electric Company, Schenectady, NY 12345 (US)
(72) Inventor: EWENS, David Spencer, Greenville, SC South Carolina 29615 (US); SMITH, Jonathan York, Greenville, SC South Carolina 29615 (US); LASKOWSKI, Benjamin David, Greenville, SC South Carolina 29615 (US)
(74) Representative: Fischer, Michael Maria

(57) **Abstract**

A gas turbine system and a corresponding method includes instructing a gas control valve (32) to open to a first position, thereby sending fuel to a respective fuel circuit (34) at a first flow rate (68), based on a first relationship between flow rate and a first set of operating parameters (52); instructing the gas control valve (32) to open to a second position, thereby adjusting the first flow rate (68) of the fuel to the respective fuel circuit to a second flow rate, based on a set of output parameters (70); determining a second relationship between adjusting the first flow rate (68) and a second set of operating parameters (84). The method also includes instructing the gas control valve (32) to open a third position, thereby sending the fuel to the respective fuel circuit at a third flow rate (90), based on the first relationship and the second relationship.

## Description

### BACKGROUND

The present disclosure relates generally to fueling power generation systems. In particular, the present disclosure relates to adaptively distributing fuel to multiple fuel circuits of a power generation system.

A power generation system, such as a gas turbine system, may include multiple fuel circuits. Distributing total fuel flow to the multiple fuel circuits (referred to as fuel splitting) may be controlled via multiple gas control valves. As such, a controller of the power generation system may control each of the gas control valves to open to respective valve positions, enabling a target flow rate of fuel in each fuel circuit corresponding to each gas control valve, to achieve a target fuel distribution or split. Fuel may be distributed to the multiple fuel circuits to reduce regulated emissions (e.g., nitrogen oxides (NOx), carbon monoxide (CO), unburned hydrocarbons (UHCs), and the like), maintain robust combustion operation, or avoid loss of flame or unstable combustion. That is, the fuel may be distributed to the multiple fuel circuits such that the resulting emissions of the power generation system are maintained at or below a level regulated by, for example, an environmental agency, robustness of combustion operation of the power generation system is maximized, combustion operation is stable, and loss of flame is avoided.

One technique to distribute fuel among the multiple fuel circuits is to schedule fuel splits as a function of a first set of operating parameters (e.g., including a combustion reference temperature) of the power generation system. The schedule may provide acceptable control over fuel distribution when the power generation system is initially commissioned. However, the schedule may not compensate for components of the power generation system degrading or changing over time, which may affect the operations for reducing regulated emissions, maintaining robust combustion operation, and avoiding loss of flame or unstable combustion. Operation of dynamic components of the power generation system (e.g., the gas control valves) may change due to various causes (e.g., usage, wear, deposits, and the like). For example, a relationship between a position of a gas control valve and a corresponding command signal, fuel flow area, and the like, may change due to usage of the gas control valve over the life of the power generation system. Similarly, static components, such as fuel circuits, fuel nozzles, fuel passage components, and the like, may collect deposits and/or erode, thereby changing characteristics related to fuel passage in the power generation system. Moreover, maintenance, cleaning, and restoration procedures may also change characteristics related to fuel passage.

Additionally, techniques that distribute fuel among the multiple fuel circuits may include adjusting the flow rate to each fuel circuit, thus adjusting fuel distribution among the multiple fuel circuits, based on a set of output parameters (e.g., including emissions, combustion stability, and the like). However, because adjusting the flow rate generally occurs after the set of output parameters deviate from a target value or range, the adjustment may take some amount of time to cause the power generation system to detect a change. This may be acceptable under certain circumstances where the set of output parameters change in a longer amount of time, but may be inadequate for controlling fuel distribution during certain transient events that may benefit from faster changes to control high emissions or unstable combustion.

### BRIEF DESCRIPTION

Certain embodiments commensurate in scope with the originally claimed invention are summarized below. These embodiments are not intended to limit the scope of the claimed embodiments, but rather these embodiments are intended only to provide a brief summary of possible forms of the embodiments disclosed herein. Indeed, the presently claimed embodiments may encompass a variety of forms that may be similar to or different from the embodiments set forth below.

In a first embodiment, a gas turbine system includes gas control valves, each gas control valve coupled to a fuel supply. The gas turbine system also includes fuel circuits, wherein each fuel circuit is coupled to a respective gas control valve. The gas turbine system further includes a gas turbine that operates based on fuel received via the fuel circuits. The gas turbine system also includes a processor communicatively coupled to the gas control valves, wherein the processor instructs a gas control valve to open to a first position, thereby sending fuel to a respective fuel circuit at a first flow rate, based at least in part on a first relationship between a flow rate of the fuel and a first set of operating parameters of the gas turbine system. The processor also instructs the gas control valve to open to a second position, thereby adjusting the first flow rate of the fuel to the respective fuel circuit to a second flow rate, based at least in part on a set of output parameters of the gas turbine system. The processor further determines a second relationship between adjusting the first flow rate and a second set of operating parameters of the gas turbine system. The processor also instructs the gas control valve to open a third position, thereby sending the fuel to the respective fuel circuit at a third flow rate, based at least in part on the first relationship and the second relationship.

In a second embodiment, a method includes instructing, via one or more processors, a gas control valve of a gas turbine system to open to a first position, thereby sending fuel to a respective fuel circuit of the gas turbine system at a first flow rate, based at least in part on a first relationship between flow rate and a first set of operating parameters of the gas turbine system. The method also includes instructing, via the one or more processors, the gas control valve to open to a second position, thereby adjusting the first flow rate of the fuel to the respective fuel circuit to a second flow rate, based at least in part on a set of output parameters of the gas turbine system. The method further includes determining, via the one or more processors, a second relationship between adjusting the first flow rate and a second set of operating parameters of the gas turbine system. The method also includes instructing, via the one or more processors, the gas control valve to open a third position, thereby sending the fuel to the respective fuel circuit at a third flow rate, based at least in part on the first relationship and the second relationship.

In a third embodiment, one or more tangible, non-transitory, machine-readable media includes instructions that cause a processor to instruct a gas control valve of a gas turbine system to open to a first position, thereby sending fuel to a respective fuel circuit of the gas turbine system at a first flow rate, based at least in part on a first relationship between flow rate and a first set of operating parameters of the gas turbine system. The instructions also cause the processor to instruct the gas control valve to open to a second position, thereby adjusting the first flow rate of the fuel to the respective fuel circuit to a second flow rate, based at least in part on a set of output parameters of the gas turbine system. The instructions further cause the processor to determine a second relationship between adjusting the first flow rate and a second set of operating parameters of the gas turbine system. The instructions also cause the processor to instruct the gas control valve to open a third position, thereby sending the fuel to the respective fuel circuit at a third flow rate, based at least in part on the first relationship and the second relationship.

### BRIEF DESCRIPTION OF THE DRAWINGS

These and other features, aspects, and advantages of the presently disclosed techniques will become better understood when the following detailed description is read with reference to the accompanying drawings in which like characters represent like parts throughout the drawings, wherein:
FIG. 1 is a block diagram of a power generation system, in accordance with an embodiment of the present disclosure;
FIG. 2 is a diagram of a combustion system of the power generation system of FIG. 1, in accordance with an embodiment of the present disclosure;
FIG. 3 is block diagram of control and data relationships of a controller of the power generation system of FIG. 1, in accordance with an embodiment of the present disclosure;
FIG. 4 is a flow diagram of a system for determining a fuel command to send to a gas control valve of the power generation system of FIG. 1, in accordance with an embodiment of the present disclosure;
FIG. 5 is a flow diagram of a method for adaptively distributing to the fuel circuits of the power generation system of FIG. 1, in accordance with an embodiment of the present disclosure;
FIG. 6 is a graph of operational characteristics of the power generation system of FIG. 1 when adaptively distributing fuel to a fuel circuit of the power generation system in response to a fuel circuit event or disturbance, in accordance with an embodiment of the present disclosure;
FIG. 7 is a graph of operational characteristics of the power generation system of FIG. 1 when adaptively distributing fuel to a fuel circuit of the power generation system in response to a change to an operating parameter, in accordance with an embodiment of the present disclosure;
FIG. 8 is a graph of a schedule used to determine a scheduled flow rate to a fuel circuit of the power generation system of FIG. 1, in accordance with an embodiment of the present disclosure; and
FIG. 9 is a graph of operational characteristics of the power generation system of FIG. 1 after adaptively distributing fuel to a fuel circuit of the power generation system in response to a change to an operating parameter, in accordance with an embodiment of the present disclosure.

### DETAILED DESCRIPTION

One or more specific embodiments of the presently disclosed embodiments will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the presently disclosed embodiments, the articles "a," "an," "the," and "said" are intended to mean that there are one or more of the elements. The terms "comprising," "including," and "having" are intended to be inclusive and mean that there may be additional elements other than the listed elements.

The present disclosure relates generally to controlling fuel operations within power generation systems. In particular, the present disclosure relates to adaptively distributing fuel to multiple fuel circuits of a power generation system. A power generation system, such as a gas turbine system, may include multiple fuel circuits. Distributing total fuel flow to the multiple fuel circuits (referred to as fuel splitting) may be controlled via multiple gas control valves. As such, a controller of the power generation system may control each of the gas control valves to open to respective valve positions, achieving a target flow rate of fuel in each fuel circuit corresponding to each gas control valve, to achieve a target fuel distribution or split. Fuel may be distributed to the multiple fuel circuits to balance reducing regulated emissions (e.g., nitrogen oxides (NOx), carbon monoxide (CO), unburned hydrocarbons (UHCs), and the like), maintaining robust combustion operation, and avoiding loss of flame or unstable combustion.

A controller of a power generation system may send fuel at a scheduled flow rate to a fuel circuit based on a schedule relating a flow rate and a first set of operating parameters of the power generation system. The first set of operating parameters may include one or more of a combustor reference temperature, ambient conditions of the power generation system, such as an ambient temperature and/or an ambient pressure, a combustor airflow (e.g., airflow to a combustion chamber of the power generation system), an inlet temperature to the combustion chamber, an inlet pressure to the combustion chamber, and the like. The controller may then adjust the scheduled flow rate based on a set of output parameters of the power generation system. The set of output parameters may include one or more of one or more emission amounts (e.g., of nitrogen oxides (NOx), carbon monoxide (CO), unburned hydrocarbons (UHCs), and the like), a degree of combustor stability, and the like.

However, because adjusting the flow rate generally occurs when the set of output parameters deviate from a target value or range, the adjustment to the scheduled flow rate may take some amount of time to cause the power generation system to detect a change. This may be acceptable under certain steady state circumstances and/or where the set of output parameters change slowly over time. However, this may be inadequate for controlling fuel distribution during certain fast transient events (e.g., when the power generation system changes its power output rapidly) that may benefit from faster changes to control high emissions or unstable combustion. The fast transient events may occur because of regulatory reasons (e.g., power grid authorities may desire a fast response when a power grid disturbance occurs), economic reasons (e.g., a power generation system may change load quickly if a balance between maintenance costs and generating extra revenue by changing the load quickly is favorable), and/or protective reasons (e.g., certain failure modes may drive rapid load changes). Moreover, changes in the set of output parameters, determined by measuring and/or modeling, may serve as a basis for scheduling or adjusting the flow rate. Because the changes in the set of output parameters may occur as a result of supplying fuel to a fuel circuit at a scheduled flow rate, thereby realizing such changes in a finite amount of time, it may take an undesirably excessive amount of time to schedule or adjust the flow rate.

With this in mind, to accommodate adjusting the flow rate based on the set of output parameters while reducing or avoiding the delay associated with detecting changes in the set of output parameters, the controller may determine a function that characterizes how adjustments to the first flow rate may be determined from a second set of operating parameters of the power generation system. The function (e.g., a direct open loop function) may reduce an amount of time used to determine when the set of output parameters changes or deviates from a target value or range. As such, the controller may send the fuel at an adapted flow rate to the fuel circuit based on the scheduled flow rate and the function. In this manner, the controller may effectively and adaptively balance between reducing regulated emission, maintaining robust combustion operation, and avoiding loss of flame or unstable combustion, without waiting for the set of output parameters of the power generations system to change and/or deviate from a target value. That is, the controller may adaptively create a direct open loop function for correcting a fuel flow command based on historical closed loop feedback control.

While the present disclosure discusses embodiments associated with a gas turbine system, it should be understood that the systems and methods described in the present disclosure may apply to any suitable power generation system, such as a steam turbine system, wind turbine system, hydroturbine system, combustion engine, hydraulic engine, electric generator, and the like.

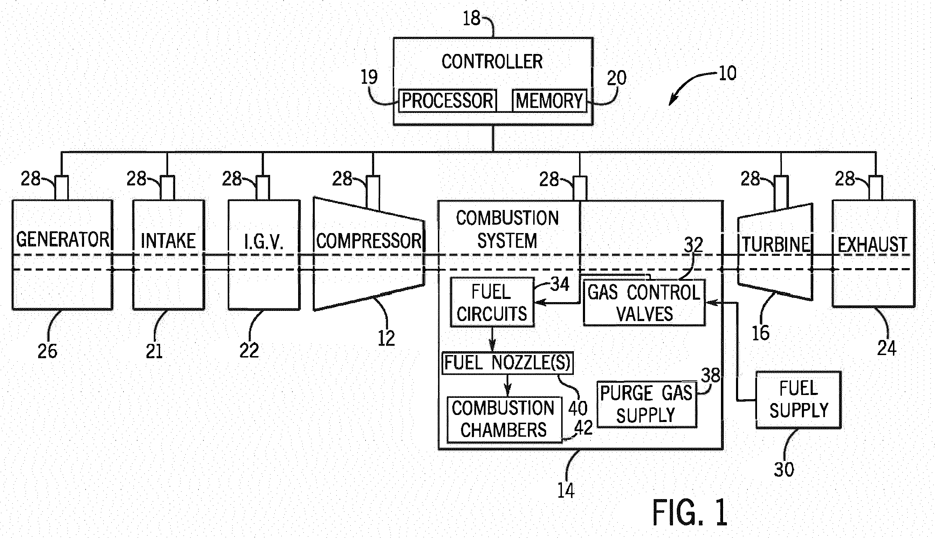

FIG. 1 is a block diagram of a power generation system (e.g., a gas turbine system 10) having a compressor 12, combustion system 14, turbine 16, and a controller 18, in accordance with an embodiment of the present disclosure. An intake duct 21 may feed ambient air to the compressor 12. The intake 21 may include ducts, filters, screens, and/or sound-absorbing devices that contribute to pressure loss of the ambient air flowing through the intake 21 into inlet guide vanes 22. An exhaust duct 24 may include sound-absorbing materials and emission control devices that apply a backpressure to the turbine 16. The amount of intake pressure loss and backpressure may vary over time due to the addition of components to and dust and dirt clogging the intake duct 21 and the exhaust duct 24. The turbine 16 may drive a generator 26 that produces electrical power.

The operation of the gas turbine system 10 may be monitored by one or more sensors 28 that may detect various observable conditions of one or more components of the gas turbine system 10 (e.g., the generator 26, the intake 21, etc.) and/or the ambient environment. In some embodiments, a plurality of redundant sensors may measure the same measured condition. For example, a plurality of redundant temperature sensors 28 may monitor a combustor reference temperature (e.g., a temperature near a combustor or a combustion chamber 42), ambient temperature surrounding the gas turbine system 10, an inlet temperature to the combustion chamber 42, a compressor discharge temperature, turbine exhaust gas temperature, and other temperature measurements of the gas stream through the gas turbine system 10. Similarly, a plurality of redundant pressure sensors 28 may monitor ambient pressure, an inlet pressure to the combustion chamber 42, static and dynamic pressure levels at the intake duct 21, exhaust duct 24, and/or at other locations in the gas stream through the gas turbine system 10. A number of redundant humidity sensors 28 (e.g., wet and/or dry bulb thermometers) may measure ambient humidity in the intake duct 21. The redundant sensors 28 may also include flow sensors, speed sensors, flame detector sensors, valve position sensors, guide vane angle sensors, output power sensors, or the like, that sense various parameters pertinent to the operation of gas turbine system 10, such as combustor airflow (e.g., airflow to the combustion chamber 42).

The controller 18 may include one or more computer systems or devices having one or more processors 19 (e.g., microprocessors) that may execute software programs to control the operation of the gas turbine system 10. The controller 18 may use sensor inputs and/or instructions from human operators. For example, the controller 18 may communicatively couple to the one or more sensors 28. Moreover, the processor(s) 19 may include multiple microprocessors, one or more "general-purpose" microprocessors, one or more special-purpose microprocessors, and/or one or more application specific integrated circuits (ASICS), or some combination thereof. For example, the processor(s) 19 may include one or more reduced instruction set (RISC) processors. The controller 18 may couple to one or more memory devices 20 that may store information such as control software look up tables, configuration data, etc. In some embodiments, the processor(s) 19 and/or the memory device(s) 20 may be external to the controller 18. The memory device(s) 20 may include a tangible, non-transitory, machine-readable-medium, such as a volatile memory (e.g., a random access memory (RAM)) and/or a nonvolatile memory (e.g., a read-only memory (ROM)). The memory device(s) 20 may store a variety of information and be used for various purposes. For example, the memory device(s) 20 may store machine-readable and/or processor-executable instructions (e.g., firmware or software) for the processor(s) 19 to execute, such as instructions for controlling the gas turbine system 10. The memory device(s) 20 may include one or more storage devices (e.g., nonvolatile storage devices) that may include read-only memory (ROM), flash memory, a hard drive, or any other suitable optical, magnetic, or solid-state storage medium, or a combination thereof.

The combustion system 14 powers the turbine 16 by mixing and igniting air and fuel. As illustrated, a fuel supply 30 provides the fuel. The fuel flow rate to a combustion system 14 may be controlled by multiple gas control valves 32 and sensed by one or more sensors 28. Each gas control valve 32 is coupled to a respective fuel circuit 34. The controller 18 may control each of the gas control valves 32 to open to respective valve positions, enabling a target flow rate of fuel in each fuel circuit 34 corresponding to each gas control valve 32, to achieve a target fuel distribution or split.

The one or more fuel circuits 34 are coupled to one or more fuel nozzles 40, which deliver the fuel in the one or more fuel circuits 34 to a combustion chamber 42 of the combustion system 14. The combustion chamber 42 mixes and ignites the fuel with air, which powers the turbine 16.

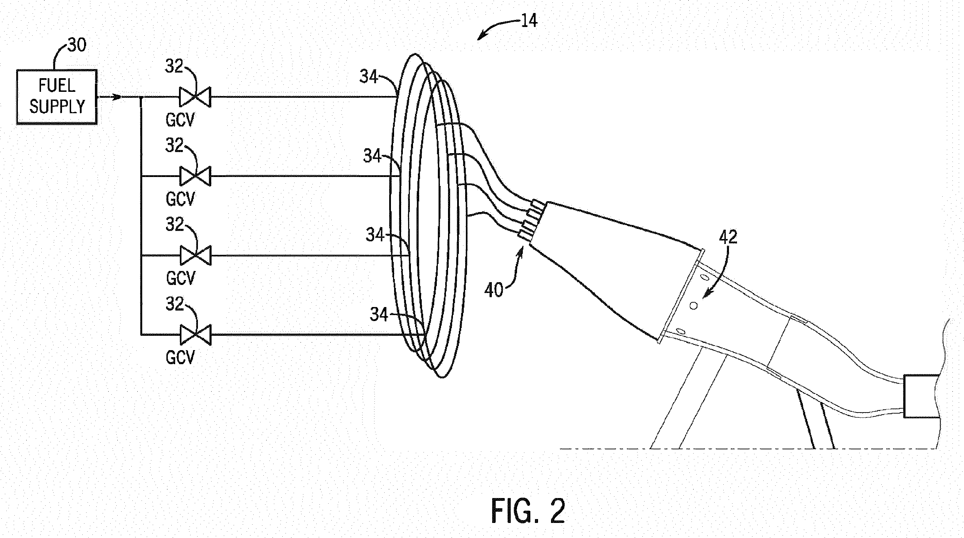

FIG. 2 is a diagram of the combustion system 14 of the gas turbine system 10 of FIG. 1, in accordance with an embodiment of the present disclosure. As illustrated the combustion system 14 includes four fuel circuits 34 that are arranged in approximately concentric circles that wrap around a portion (e.g., including the fuel nozzle 40 and the combustion chamber 42) of the combustion system 14. Each fuel circuit 34 is coupled to a respective gas control valve 32, which is coupled to the fuel supply 30. The controller 18 may control each of the gas control valves 32 to open to respective valve positions, enabling a target flow rate of fuel in each fuel circuit 34 corresponding to each gas control valve 32, to achieve a target fuel distribution or split. While FIG. 2 illustrates four fuel circuits 34 and four associated gas control valves 32, it should be understood that the present disclosure applies to power generation systems having fewer or more fuel circuits 34 and associated gas control valves 32.

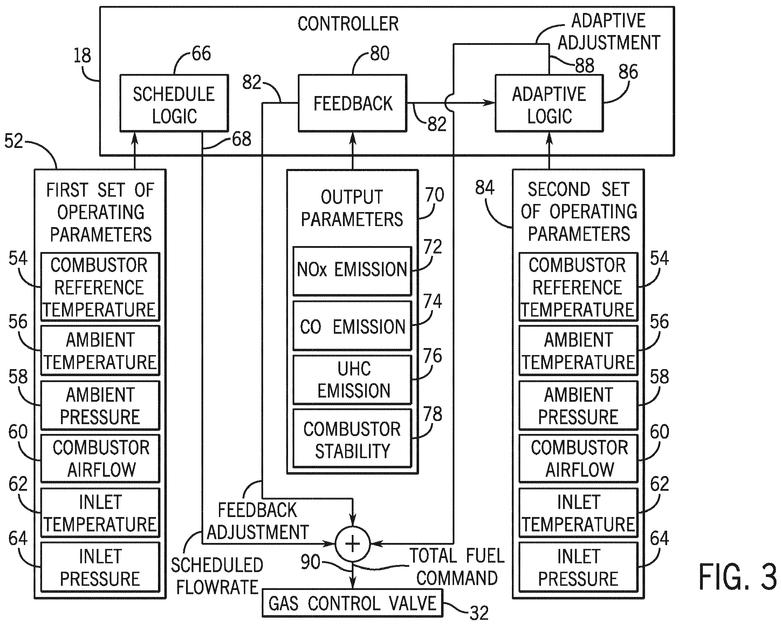

FIG. 3 is block diagram of control and data relationships 50 of the controller 18 of the gas turbine system 10 of FIG. 1, in accordance with an embodiment of the present disclosure. The controller 18 may receive a first set of operating parameters 52 of the gas turbine system 10. The first set of operating parameters 52 may be a set of characteristics or criteria associated with operating the gas turbine system 10. The first set of operating parameters 52 may include one or more of a combustor reference temperature 54, ambient conditions of the gas turbine system 10, such as an ambient temperature 56 and/or an ambient pressure 58, a combustor airflow 60 (e.g., airflow to the combustion chamber 42), an inlet temperature 62 to the combustion chamber 42, an inlet pressure 64 to the combustion chamber 44, and the like. The first set of operating parameters 52 may be measured using the sensor(s) 28 of FIG. 1, estimated, modeled, simulated, and the like.

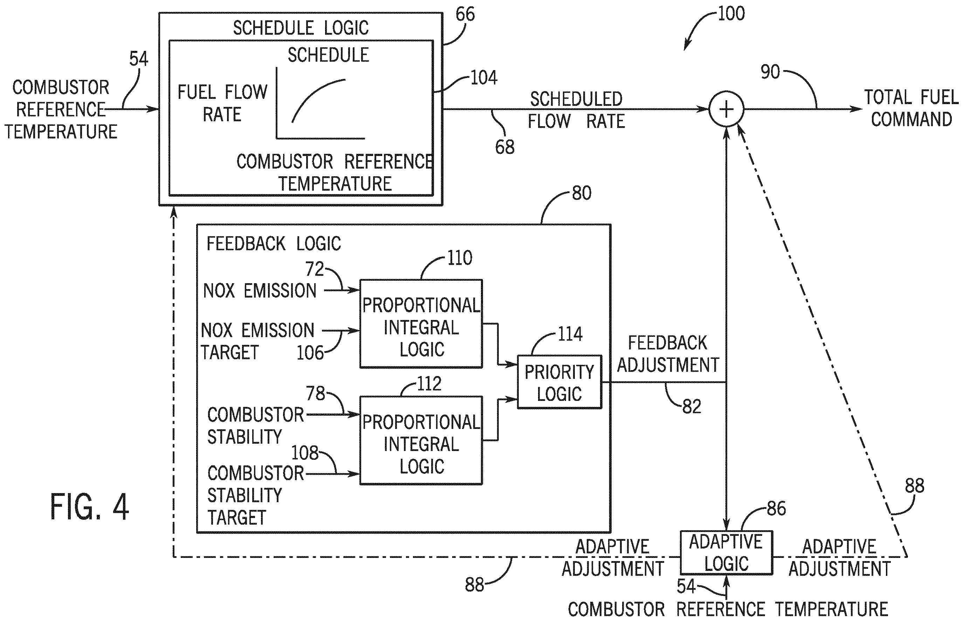

The controller 18 may include a schedule (as shown in FIG. 4) that relates fuel distribution among the fuel circuits 34 to the first set of operating parameters 52. The schedule may be generated to effectively balance between reducing regulated emission, maintaining robust combustion operation, and avoiding loss of flame or unstable combustion. However, the schedule may not compensate for components of the gas turbine system 10 degrading or changing over time, which may affect the balance between reducing regulated emission, maintaining robust combustion operation, and avoiding loss of flame or unstable combustion. Operation of dynamic components of the gas turbine system 10 (e.g., the gas control valves 32) may change due to various causes (e.g., usage, wear, deposits, and the like). For example, a relationship between a position of the gas control valve 32 and a corresponding command signal, fuel flow area, and the like, may change due to usage of the gas control valve 32 over the life of the gas turbine system 10. Similarly, static components, such as the fuel circuit 34, the fuel nozzles 40, fuel passage components, and the like, may collect deposits and/or erode, thereby changing characteristics related to fuel passage in the gas turbine system 10. Moreover, maintenance, cleaning, and restoration procedures may also change characteristics related to fuel passage within the gas control valves 32, the fuel circuit 34, the fuel nozzles 40, the fuel passage components, and the like.

The schedule may be stored, for example, in the memory device(s) 20. In some embodiments, the schedule may be in the form of a function (e.g., a transfer function), a look-up table, a formula (e.g., a quadratic formula), and the like. In some embodiments, the schedule may include one or more schedules associated with a corresponding fuel circuit 34. For example, if the gas turbine system 10 has four fuel circuits 34, there may be four schedules, each schedule corresponding to a respective fuel circuit 34. In some embodiments, the number of schedules may be less than the number of fuel circuits 34. For example, if the gas turbine system 10 has four fuel circuits 34, there may be three schedules, as the three schedules may determine the flow rate and/or amount of fuel to distribute to three fuel circuits 34, and the remaining fuel may be distributed to the remaining fuel circuit 34. In some embodiments, each fuel circuit 34 may have multiple schedules, e.g., for different combustion modes. In some combustion modes, only a subset of the gas control valves 32 may be operational or controllable. For such combustion modes, the controller 18 may schedule the flow rate and/or amount of fuel that corresponds to the operational gas control valves 32 to achieve a target flow rate and/or amount of fuel to the fuel circuits 34.

The schedule, corresponding to a respective fuel circuit 34 of multiple fuel circuits 34 of the gas turbine system 10, may determine a respective scheduled flow rate 68 of fuel to send to the respective fuel circuit 34 to achieve a target fuel distribution or split, based on the first set of operating parameters 52. That is, distributing total fuel flow to the multiple fuel circuits 34 may be controlled via the multiple gas control valves 32. As such, the controller 18 may control each of the gas control valves 32 to open to respective valve positions, enabling a target flow rate of fuel in each fuel circuit 34 corresponding to each gas control valve 32, to achieve a target fuel distribution or split. As such, the schedule may determine a relationship between the scheduled flow rate 68 and the first set of operating parameters 52. The controller 18 may instruct a respective gas control valve 32 associated with the respective fuel circuit 34 to send fuel to the respective fuel circuit 34 at the scheduled flow rate 68.

In some embodiments, the schedule may determine a percentage of a total fuel flow command to apply to the respective fuel circuit 34 based on the total fuel flow command and the first set of operating parameters 52. For example, the controller 18 may determine the total fuel flow command based on a total fuel schedule corresponding to total fuel to the combustion chamber 42, operator instruction, and the like. The controller 18 may then use the total fuel flow command and the first set of operating parameters 52 to determine the percentage of the total fuel flow command to apply to the respective fuel circuit 34. Similarly, the percentage of the total fuel flow commands to apply to other fuel circuits 34 may also be determined. The controller 18 may control each of the gas control valves 32 to open to respective valve positions to achieve the scheduled percentages of the total fuel flow command to each respective fuel circuit 34.

The controller 18 may receive a set of output parameters 70 of the gas turbine system 10. The set of output parameters 70 may be received in response to the controller 18 adjusting the gas control valve 32 to send fuel to the associated fuel circuit 34 at the scheduled flow rate. The set of output parameters 70 may include one or more of one or more emission amounts (e.g., of nitrogen oxides (NOx) 72, carbon monoxide (CO) 74, unburned hydrocarbons (UHCs) 76, and the like), a degree of combustor stability 78, and the like. The set of output parameters 70 may be measured using the sensor(s) 28 of FIG. 1, estimated, modeled, simulated, and the like.

The controller 18 may include feedback logic 80 that determines a fuel flow rate adjustment (e.g., a feedback adjustment) 82 based on the set of output parameters 70. For each output parameter, there may be a respective target value or range. For example, for NOx emission 72, the target range may be a regulated allowable amount of NOx emission 72 (e.g., as regulated by an internal policy, environmental agency, city, state, province, country, and the like). In some embodiments, the target range may be expressed as a threshold range. When the NOx emission 72 is outside of the target range, the feedback logic 80 may determine a feedback adjustment 82 to bring the NOx emission 72 of the gas turbine system 10 back within the target range. In some embodiments, the feedback adjustment 82 may include adjusting other input parameters to the gas turbine system 10.

For instance, the feedback logic 80 may adjust the scheduled flow rate 68 to the fuel circuit 34, and thus adjust fuel distribution among the multiple fuel circuits 34, based on the set of output parameters 70. For example, the controller 18 may use the feedback logic 80 to instruct a respective gas control valve 32 associated with a respective fuel circuit 34 to adjust the scheduled flow rate 68 of fuel to the fuel circuit 34 via the feedback adjustment 82. However, adjusting the scheduled flow rate 68 may occur when the set of output parameters 70 deviate from a target value or range, and as such, the adjustment may take some amount of time to cause the gas turbine system 10 to detect a change. This may be acceptable under certain circumstances where the set of output parameters 70 change in a longer amount of time, but may be inadequate for controlling fuel distribution during certain transient events (e.g., when the power generation system changes its power output rapidly) that may benefit from faster changes to control high emissions or unstable combustion. The fast transient events may occur because of regulatory reasons (e.g., power grid authorities may desire a fast response when a power grid disturbance occurs), economic reasons (e.g., a power generation system may change load quickly if a balance between maintenance costs and generating extra revenue by changing the load quickly is favorable), and/or protective reasons (e.g., certain failure modes may drive rapid load changes). Moreover, changes in the set of output parameters 70, determined by measuring and/or modeling, may serve as a basis for scheduling or adjusting the flow rate. Because the changes in the set of output parameters 70 may occur as a result of supplying fuel to a fuel circuit 34 at a scheduled flow rate, thereby realizing such changes in a finite amount of time, it may take an undesirably excessive amount of time to schedule or adjust the flow rate.

The controller 18 may also receive a second set of operating parameters 84 of the gas turbine system 10. The second set of operating parameters 84 may be a set of characteristics or criteria associated with operating the gas turbine system 10. The second set of operating parameters 84 may include one or more of a combustor reference temperature 54, ambient conditions of the gas turbine system 10, such as an ambient temperature 56 and/or an ambient pressure 58, a combustor airflow 60 (e.g., airflow to the combustion chamber 42), an inlet temperature 62 to the combustion chamber 42, an inlet pressure 64 to the combustion chamber 44, and the like. The second set of operating parameters 84 may be measured using the sensor(s) 28 of FIG. 1, estimated, modeled, simulated, and the like. In some embodiments, the second set of operating parameters 84 may be the same as or include the first set of operating parameters 52. In alternative embodiments, the second set of operating parameters 84 may be different from the first set of operating parameters 52.

The controller 18 may include adaptive logic 86 that determines an adaptive adjustment 88 to the scheduled flow rate 68 based on the feedback adjustment 82 and the second set of operating parameters 84. The adaptive logic 86 may estimate or model the feedback adjustment 82 based on the second set of operating parameters 84. As such, the adaptive logic 86 may determine a relationship between adjusting the scheduled flow rate 68 via the feedback adjustment 82 and the second set of operating parameters 84.

The controller 18 may combine the adaptive adjustment 88, the scheduled flow rate 68, and the feedback adjustment 82 to generate a total fuel command 90. The total fuel command 90 may be an instruction sent by the controller 18 to the gas control valve 32 to send fuel to the corresponding fuel circuit 34 at a total flow rate of any combination of the scheduled flow rate 68, the feedback adjustment 82, and/or the adaptive adjustment 88. In some embodiments, the controller 18 may update the schedule logic 66 with the adaptive adjustment 88 to generate the total fuel command 90. The controller 18 may then instruct the gas control valve 32 to send fuel based on the total fuel command 90 to the fuel circuit 34. Using the adaptive adjustment 88 may reduce the feedback adjustment 82 (e.g., in subsequent iterations of fuel distribution), as the feedback adjustment 82 may at least partially be predicted by the adaptive adjustment 88. In this manner, the controller 18 may effectively and adaptively balance between reducing regulated emission, maintaining robust combustion operation, and avoiding loss of flame or unstable combustion, without waiting for the set of output parameters to change and/or deviate from a target value.

FIG. 4 is a flow diagram of a system 100 for determining a total fuel command 90 to send to a gas control valve 32 of the gas turbine system 10 of FIG. 1, in accordance with an embodiment of the present disclosure. The system 100 includes the schedule logic 66, which may receive the combustor reference temperature 54 and receive, generate, or otherwise store a schedule 104. The schedule 104, as mentioned above, may characterize a fuel flow rate in terms of the combustor reference temperature 54. That is, the schedule 104 may indicate or provide a fuel flow rate value for each combustor reference temperature value. The combustor reference temperature 54 is used as an example, and any of the operating parameters of the first set of operating parameters 52, as described in FIG. 3, may be used in addition to or instead of the combustor reference temperature 54. Based on the schedule 104 and the combustor reference temperature 54, the schedule logic 66 may determine the scheduled flow rate 68.

The system 100 may also include the feedback logic 80, which may include one or more proportional integral logics. A proportional integral logic may include a control loop feedback mechanism that calculates an error value (e.g., a difference between a desired target and a variable) and applies a correction based on proportional and integral terms. As illustrated, the feedback logic 80 includes a first proportional integral logic 110 and a second proportional integral logic 112. In some embodiments, the feedback logic 80 may include more or fewer proportional integral logics. By way of example, the first proportional integral logic 110 receives the NOx emission 72 and an NOx emission target 106 as inputs. The NOx emission target 106 may be a threshold value of a highest regulated allowable amount of NOx emission 72 (e.g., as regulated by an internal policy, environmental agency, city, state, province, country, and the like). In some embodiments, the NOx emission target 106 may be expressed as a threshold range. The first proportional integral logic 110 may determine when the NOx emission 72 exceeds the NOx emission target 106 based on a measured or a modeled value of the NOx emission 72. Similarly, the second proportional integral logic 112 receives the combustor stability 78 and a combustor stability target 108 as inputs. The second proportional integral logic 112 may determine when the combustor stability 78 exceeds the combustor stability target 108 based on a measured or a modeled value of the combustor stability 78. The NOx emission 72 and the combustor stability 78 are used as examples, and any of the operating parameters of the set of output parameters 70 as described in FIG. 3 may be used in addition to or instead of the NOx emission 72 and the combustor stability 78.

The determinations of whether the NOx emission 72 exceeds the NOx emission target 106 and whether the combustor stability 78 exceeds the combustor stability target 108 are input to a priority logic 114. The priority logic 114 may prioritize the inputs. In some embodiments, priority may be given to output parameters 70 associated with health of the gas turbine system 10 over output parameters 70 associated with, for example, emissions, for safety reasons and to prolong the life of the gas turbine system 10. For example, the priority logic 114 may prioritize the combustor stability 78 when it exceeds the combustor stability target 108, even when the NOx emission 72 exceeds the NOx emission target 106. In other embodiments, priority may be given to output parameters 70 associated with emissions for environmental reasons. For example, the priority logic 114 may prioritize the NOx emission 72 when it exceeds the NOx emission target 106, even when the combustor stability 78 exceeds the combustor stability target 108. In certain embodiments, the priority may be set by an operator of the gas turbine system 10.

In some embodiments, the priority logic 114 may also receive a degree of the NOx emission 72 exceeding the NOx emission target 106 and a degree of the combustor stability 78 exceeding the combustor stability target 108. The priority logic 114 may then factor in the degrees in prioritizing the NOx emission 72 and the combustor stability 78. For example, if the priority logic 114 determines that a first input exceeds its respective target by a certain percentage (e.g., 10-500% or less or more) greater than a second input, then it will prioritize the first input. The feedback logic 80 may then output the feedback adjustment 82 based on the NOx emission 72 and/or the combustor stability 78. The feedback adjustment 82 may then bring the NOx emission 72 and the combustor stability 78 of the gas turbine system 10 back within respective target ranges.

The system includes the adaptive logic 86, which may receive the feedback adjustment 82 and the combustor reference temperature 54 as inputs. The combustor reference temperature 54 is used as an example, and any of the operating parameters of the second set of operating parameters 84 as described in FIG. 3 may be used in addition to or instead of the combustor reference temperature 54. The operating parameter used as an input to the adaptive logic 86 may or may not be the same as the operating parameter used as an input to the schedule logic 66. The adaptive logic 86 determines a function (e.g., a transfer function) that characterizes the feedback adjustment 82 in terms of the combustor reference temperature 54. In some embodiments, the adaptive logic 86 determines and/or adjusts constants of the function to better fit feedback adjustment 82 and combustor reference temperature 54 data. The function may be used to determine the adaptive adjustment 88, which may be output by the adaptive logic 86. In some embodiments, the adaptive logic 86 may determine a look-up table, a formula (e.g., a quadratic formula), a schedule, and the like, that relates the feedback adjustment 82 to the combustor reference temperature 54.

The system 100 may thus output the total fuel command 90 that combines the scheduled flow rate 68, the feedback adjustment 82, and the adaptive adjustment 88. As illustrated, the adaptive adjustment 88 may also be sent to the schedule logic 66. In this case, the schedule 104 may be adjusted to incorporate the adaptive adjustment 88. The total fuel command 90 may then combine the scheduled flow rate 68 and the feedback adjustment 82, such that the scheduled flow rate 68 may be based on and/or incorporate the adaptive adjustment 88.

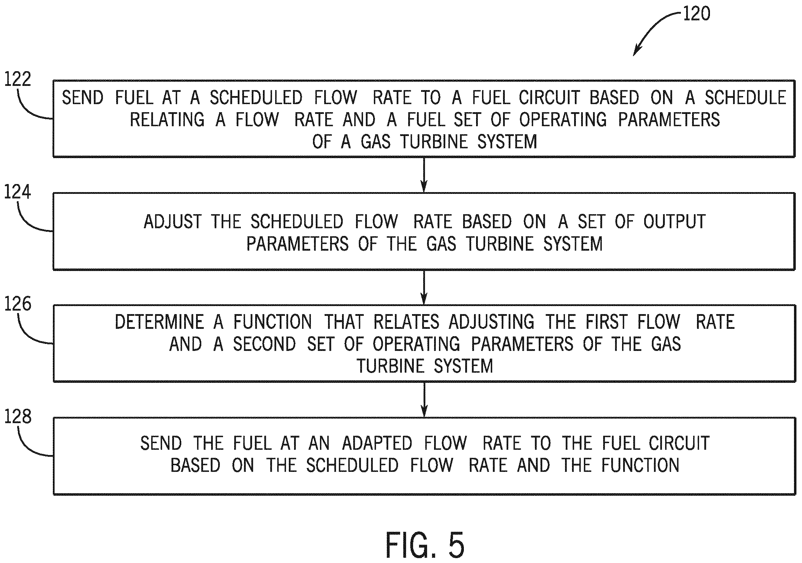

FIG. 5 is a flow diagram of a method 120 for adaptively distributing to the fuel circuits 34 of the gas turbine system 10 of FIG. 1, in accordance with an embodiment of the present disclosure. The method 120 may be performed by any suitable device that may control components of the gas turbine system 10, such as the controller 18. While the method 120 is described using steps in a specific sequence, it should be understood that the present disclosure contemplates that the describe steps may be performed in different sequences than the sequence illustrated, and certain described steps may be skipped or not performed altogether. In some embodiments, the method 120 may be implemented by executing instructions stored in a tangible, non-transitory, computer-readable medium, such as the memory device(s) 20, using a processor, such as the processor(s) 19.

The controller 18 may send (process block 122) fuel at a scheduled flow rate 68 to a fuel circuit 34 of the gas turbine system 10. The scheduled flow rate 68 may be based on the schedule 104 that relates a fuel flow rate to the first set of operating parameters 52 of the gas turbine system 10. The schedule 104, corresponding to a fuel circuit 34 of multiple fuel circuits 34 of the gas turbine system 10, may determine a scheduled flow rate 68 of fuel to send to the fuel circuit 34 to achieve a target fuel distribution or split, based on the first set of operating parameters 52. As such, the schedule 104 may characterize a relationship between the scheduled flow rate 68 and the first set of operating parameters 52. In some embodiments, the controller 18 may instruct the corresponding gas control valve 32 to open to a target position at a particular time, thereby sending fuel to the fuel circuit 34 at the scheduled flow rate 68.

The controller 18 may then adjust (process block 124) the scheduled flow rate 68 based on the set of output parameters 70 of the gas turbine system 10. The set of output parameters 70 may be received in response to the controller 18 adjusting the gas control valve 32 to send fuel to the associated fuel circuit 34 at the scheduled flow rate. Adjusting the scheduled flow rate 68 to a fuel circuit 34 of the multiple fuel circuits effectively adjusts fuel distribution among the multiple fuel circuits 34. However, adjusting the scheduled flow rate 68 may occur when the set of output parameters 70 deviate from a target value or range, and as such, the adjustment may take some amount of time to cause the gas turbine system 10 to detect a change. This may be acceptable under certain circumstances where the set of output parameters 70 change in a longer amount of time, but may be inadequate for controlling fuel distribution during certain transient events (e.g., when the power generation system changes its power output rapidly) that may benefit from faster changes to control high emissions or unstable combustion. The fast transient events may occur because of regulatory reasons (e.g., power grid authorities may desire a fast response when a power grid disturbance occurs), economic reasons (e.g., a power generation system may change load quickly if a balance between maintenance costs and generating extra revenue by changing the load quickly is favorable), and/or protective reasons (e.g., certain failure modes may drive rapid load changes). Moreover, changes in the set of output parameters 70, determined by measuring and/or modeling, may serve as a basis for scheduling or adjusting the flow rate. Because the changes in the set of output parameters 70 may occur as a result of supplying fuel to a fuel circuit 34 at a scheduled flow rate, thereby realizing such changes in a finite amount of time, it may take an undesirably excessive amount of time to schedule or adjust the flow rate.

The set of output parameters 70 may include one or more of one or more emission amounts (e.g., of nitrogen oxides (NOx) 72, carbon monoxide (CO) 74, unburned hydrocarbons (UHCs) 76, and the like), a degree of combustor stability 78, and the like. The set of output parameters 70 may be measured using the sensor(s) 28 of FIG. 1, estimated, modeled, simulated, and the like.

The controller 18 may then determine (process block 126) a function that relates adjusting (process block 124) the scheduled flow rate 68 and the second set of operating parameters 84 of the gas turbine system 10. The function may be a transfer function that represents the adjustment made to the scheduled flow rate 68 in terms of the second set of operating parameters 84. In some embodiments, the controller 18 may determine and/or adjust constants of the transfer function to better fit feedback adjustment 82 and combustor reference temperature 54 data. The function may be used to determine the adaptive adjustment 88.

The controller 18 may send (process block 128) the fuel at an adapted flow rate (e.g., the total fuel command 90) based on the scheduled flow rate 68 and the function (from process block 126). The total fuel command 90 may also include the feedback adjustment 82. The controller 18 may determine the adapted flow rate by combining the scheduled flow rate 68 and the adaptive adjustment 88 (from process block 126). In some embodiments, the controller 18 may adjust the schedule 104 using the adaptive adjustment 88. As such, the resulting scheduled flow rate 68 may be based on the function (from process block 126). Using the adapted flow rate may reduce the adjustment from process block 124 (in subsequent iterations of the method 120), as the adjustment may at least partially be predicted by the adaptive adjustment 88. In this manner, the controller 18 may effectively and adaptively balance between reducing regulated emission, maintaining robust combustion operation, and avoiding loss of flame or unstable combustion, without waiting for the set of output parameters to change and/or deviate from a target value.

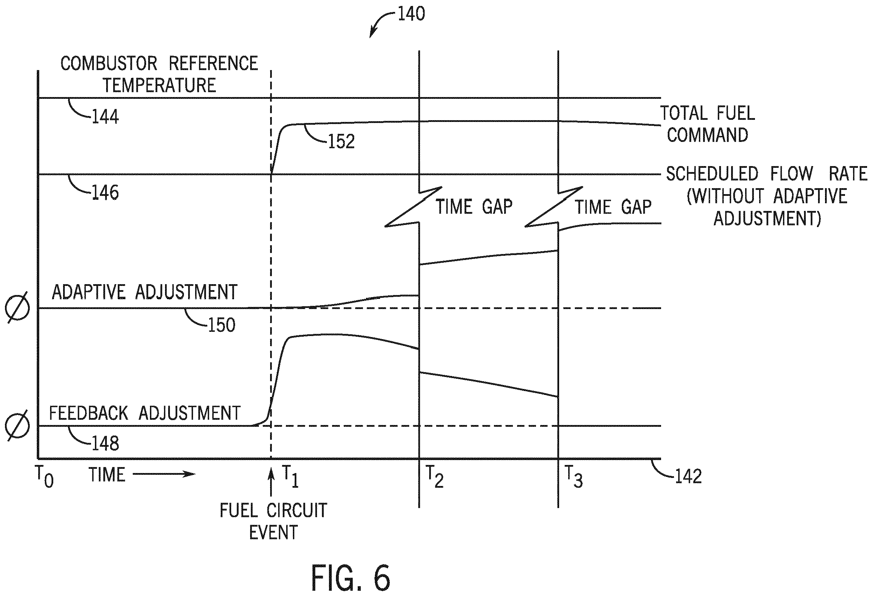

FIG. 6 is a graph 140 of operational characteristics of the gas turbine system 10 of FIG. 1 when adaptively distributing fuel to a fuel circuit 34 of the gas turbine system 10 in response to a fuel circuit event or disturbance, in accordance with an embodiment of the present disclosure. The graph 140 illustrates how distributing fuel to the fuel circuit 34 is adapted when the fuel circuit event or disturbance occurs.

The horizontal axis 142 of the graph 140 represents time. A combustor reference temperature curve 144 (corresponding to the combustor reference temperature 54) remains constant throughout the graph 140. As a result, a scheduled flow rate curve 146 (corresponding to the scheduled flow rate 68), which is based on the first set of operating parameters 52 that includes the combustor reference temperature 54, also remains constant throughout the graph 140.

A feedback adjustment curve 148 (corresponding to the feedback adjustment 82) is based on a set of output parameters 70, which may include one or more of one or more emission amounts (e.g., of nitrogen oxides (NOx) 72, carbon monoxide (CO) 74, unburned hydrocarbons (UHCs) 76, and the like), a degree of combustor stability 78, and the like. Between times to and t₁, the feedback adjustment curve 148 remains constant because there is no change in the set of output parameters 70. However, at t₁, a fuel circuit event or disturbance occurs that affects the set of output parameters 70. For example, the fuel circuit 34 or the gas control valve 32 associated with the fuel circuit 34 may become less effective due to a deposit. As a result, NOx emission 72, CO emission 74, UHC emission 76, and/or the combustor stability 78 may change. As an example, the NOx emission 72 may exceed the NOx emission target 106. The controller 18 receives the changed set of output parameters 70, determines that at least one output parameter exceeds a target, and generates a feedback adjustment 82 to the scheduled flow rate 68 to bring the output parameter below the target. As such, at time t₁, the feedback adjustment curve 148 increases when the feedback adjustment 82 first attempts to bring the output parameter below the target. Due to the feedback adjustment 82 increasing, the total fuel command curve 152 (corresponding to the total fuel command 90) also increases.

An adaptive adjustment curve 150 (corresponding to the adaptive adjustment 88) is based on the feedback adjustment 82 and the second set of operating parameters 84. The second set of operating parameters 84 may include the combustor reference temperature 54. Between times to and t₁, the adaptive adjustment curve 150 remains constant at zero because the feedback adjustment curve 148 remains constant at zero. However, at time t₁, the fuel circuit event or disturbance occurs that results in the feedback adjustment curve 148 increasing. The controller 18 determines a function that represents the increasing feedback adjustment 82 in terms of the second set of operating parameters 84. The controller 18 generates the adaptive adjustment 88 that increases the scheduled flow rate 68, which causes the feedback adjustment 82 to decrease. As such, the adaptive adjustment curve 150 begins increasing at time t₁, and the feedback adjustment curve 148 begins to decrease after the initial increase at time t₁. Because the total flow rate provided by the adaptive adjustment 88 and the feedback adjustment 82 added to the scheduled flow rate 68 is constant, the total fuel command curve 152 remains constant.

Similarly, at times t₂ and t₃, which occur at respective time gaps (to more clearly illustrate the present disclosure), the adaptive adjustment curve 150 continues increasing while the feedback adjustment 82 continues decreasing. After time t₃, the adaptive adjustment 88 has completely adapted to the fuel circuit event and disturbance, and as such, the adaptive adjustment curve 150 reaches a constant state, while the feedback adjustment curve 148 returns to zero. Because the adaptive adjustment 88 effectively compensates for the feedback adjustment 82, the total fuel command curve 152 remains constant throughout the graph 140 after the initial fuel adjustment reaction to the fuel circuit event or disturbance that occurs at t₁. In this manner, the controller 18 may effectively and adaptively balance between reducing regulated emission, maintaining robust combustion operation, and avoiding loss of flame or unstable combustion, without waiting for the set of output parameters to change and/or deviate from a target value.

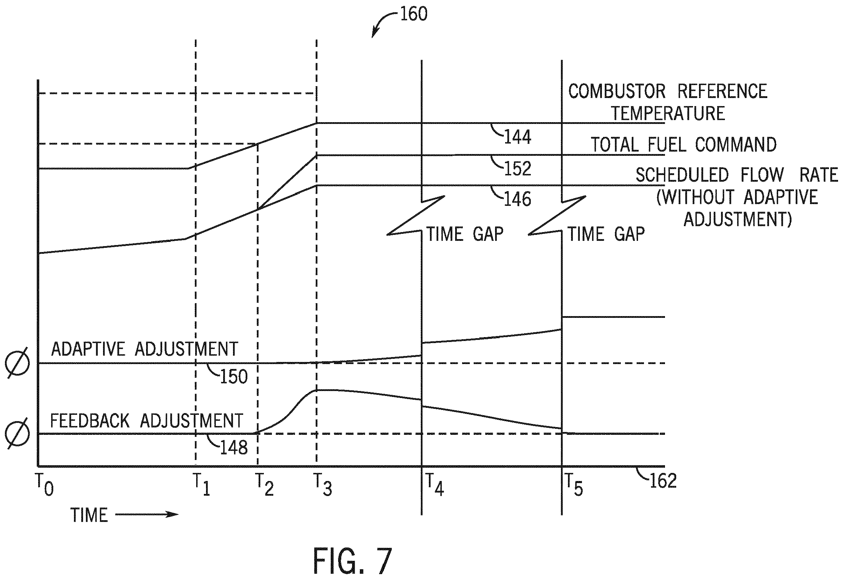

FIG. 7 is a graph 160 of operational characteristics of the gas turbine system 10 of FIG. 1 when adaptively distributing fuel to a fuel circuit 34 of the gas turbine system 10 in response to a change to an operating parameter, in accordance with an embodiment of the present disclosure. The graph 160 illustrates how distributing fuel to the fuel circuit 34 is adapted when the change to the operating parameter occurs.

The horizontal axis 162 of the graph 160 represents time. A combustor reference temperature curve 144 (corresponding to the combustor reference temperature 54) remains constant between times to and t₁. As a result, a scheduled flow rate curve 146 (corresponding to the scheduled flow rate 68), which is based on the first set of operating parameters 52 that includes the combustor reference temperature 54, also remains constant between times to and t₁. A feedback adjustment curve 148 (corresponding to the feedback adjustment 82) remains constant during this time because there is no change in the set of output parameters 70. As such, an adaptive adjustment curve 150 (corresponding to the adaptive adjustment 88), based on the feedback adjustment 82 and the second set of operating parameters 84, also remains constant between times t₀ and t₁ because there is no change to the feedback adjustment 82. The second set of operating parameters 84 may include the first set of operating parameters 52, including the combustor reference temperature 54.

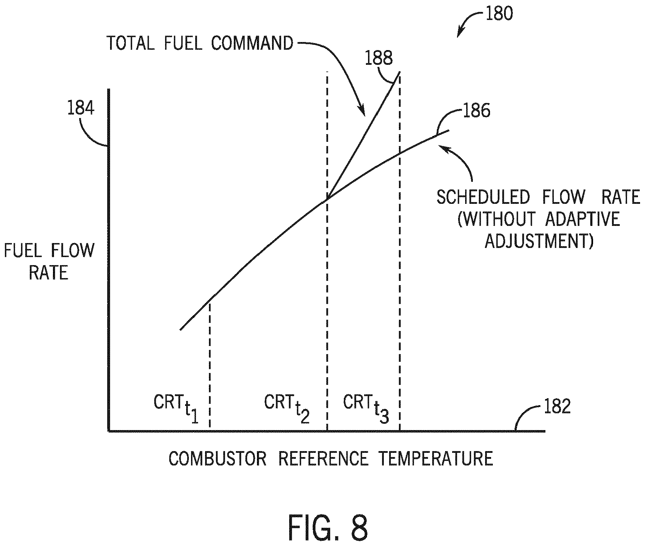

However, between times t₁ and t₃, the combustor reference temperature 54 increases, as illustrated by the combustor reference temperature curve 144. Following a schedule 104 that is used to determine the scheduled flow rate 68 based on the combustor reference temperature 54, the scheduled flow rate 68 also increases. The schedule 104 may be a graph 180 as illustrated in FIG. 8, which includes a horizontal axis 182 representing the combustor reference temperature 54 and a vertical axis 184 representing a fuel flow rate. The graph 180 includes a scheduled flow rate curve 186 (corresponding to the scheduled flow rate 68) that is determined based on the combustor reference temperature 54. Three combustor reference temperature values (e.g., CRTti, CRTₜ₂, and CRTₜ₃) are indicated on the graph 180 that correspond to the times t₁, t₂, and t₃ on the graph 160 of FIG. 7. A total fuel command curve 188 is also included on the graph 180 for reference. The total fuel command curve 188 increases flow rate over the scheduled flow rate curve 186 starting at CRTₜ₂.

Referring back to FIG. 7, the feedback adjustment curve 148 remains constant between times t₁ and t₂ because there is no change in the set of output parameters 70. As such, the adaptive adjustment curve 150 also remains constant during this time.

At time t₂, the set of output parameters 70 changes. For example, the NOx emission 72 may exceed the NOx emission target 106. The controller 18 receives the changed set of output parameters 70, determines that at least one output parameter exceeds a target, and generates a feedback adjustment 82 to the scheduled flow rate 68 to bring the output parameter below the target. As such, at time t₂, the feedback adjustment curve 148 increases when the feedback adjustment 82 first attempts to bring the output parameter below the target. Due to the feedback adjustment 82 increasing, the total fuel command curve 152 (corresponding to the total fuel command 90) also increases.

At time t₂, the controller 18 determines a function that expresses the increasing feedback adjustment 82 in terms of the second set of operating parameters 84. The controller 18 generates the adaptive adjustment 88 that increases the scheduled flow rate 68, which causes the feedback adjustment 82 to decrease. As such, the adaptive adjustment curve 150 begins increasing at time t₂, and the feedback adjustment curve 148 begins to decrease after the initial increase at time t₂. Because the total flow rate provided by the adaptive adjustment 88 and the feedback adjustment 82 added to the scheduled flow rate 68 is constant, the total fuel command curve 152 remains constant.

Similarly, at times t₄ and t₅, which occur at respective time gaps (to more clearly illustrate the present disclosure), the adaptive adjustment curve 150 continues increasing while the feedback adjustment 82 continues decreasing. After time t₅, the adaptive adjustment 88 has completely adapted to the fuel circuit event and disturbance, and as such, the adaptive adjustment curve 150 reaches a constant state, while the feedback adjustment curve 148 returns to zero. Because the adaptive adjustment 88 effectively compensates for the feedback adjustment 82, the total fuel command curve 152 remains constant throughout the graph 160 after the combustor reference temperature curve 144 reaches a constant state at t₃. In this manner, the controller 18 may effectively and adaptively balance between reducing regulated emission, maintaining robust combustion operation, and avoiding loss of flame or unstable combustion, without waiting for the set of output parameters to change and/or deviate from a target value.

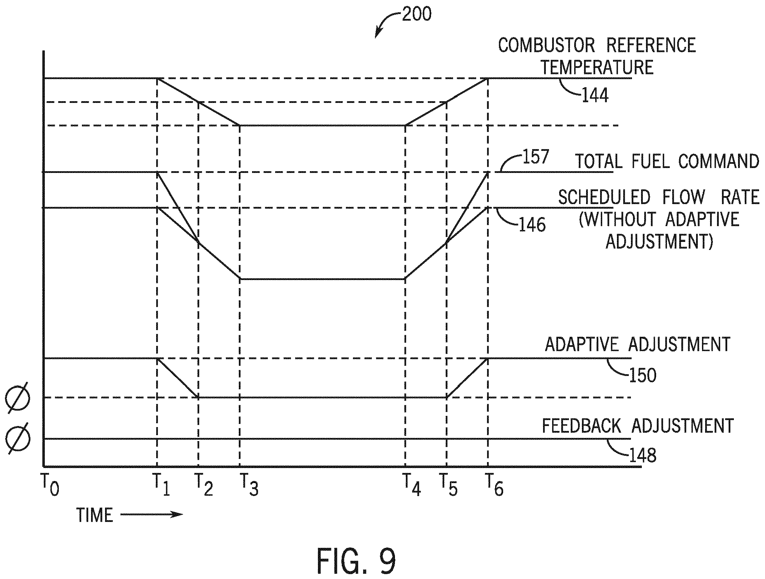

FIG. 9 is a graph 200 of operational characteristics of the gas turbine system 10 of FIG. 1 after adaptively distributing fuel to a fuel circuit 34 of the gas turbine system 10 in response to a change to an operating parameter, in accordance with an embodiment of the present disclosure. The graph 200 operational characteristics of the gas turbine system 10 in response to a subsequent change to the operating parameter, and may represent a continuation of the graph 160 of FIG. 7.

The horizontal axis 202 of the graph 200 represents time. A combustor reference temperature curve 144 (corresponding to the combustor reference temperature 54) remains constant between times to and t₁. As a result, a scheduled flow rate curve 146 (corresponding to the scheduled flow rate 68), which is based on the first set of operating parameters 52 that includes the combustor reference temperature 54, also remains constant between times to and t₁. A feedback adjustment curve 148 (corresponding to the feedback adjustment 82) remains constant during this time because there is no change in the set of output parameters 70.

An adaptive adjustment curve 150 (corresponding to the adaptive adjustment 88), based on the feedback adjustment 82 and the second set of operating parameters 84, also remains constant between times t₀ and t₁ because there is no change to the feedback adjustment 82. The adaptive adjustment curve 150 may be nonzero between times t₀ and t₁ because the adaptive adjustment 88 generates the nonzero value based on the second set of operating parameters 84 and past behavior of the feedback adjustment 82. In some embodiments, the second set of operating parameters 84 may include the first set of operating parameters 52, including the combustor reference temperature 54. The controller 18 and/or the adaptive logic 86 may have determined a function that expresses that, for the combustor reference temperature 54 value between times to and t₁, the adaptive adjustment 88 should be that shown by the adaptive adjustment curve 150 between times to and t₁. As such, a total fuel command curve 188 exceeds the scheduled flow rate curve 186 during this time because of the adaptive adjustment 88, while staying constant.

At time t₁, the combustor reference temperature 54 decreases, as illustrated by the combustor reference temperature curve 144. The scheduled flow rate 68 also decreases, as illustrated by the scheduled flow rate curve 186, based on the schedule 104 (e.g., the graph 180 in FIG. 8) and the combustor reference temperature 54. The feedback adjustment curve 148 remains constant because the output parameters 70 do not change. The adaptive adjustment 88 decreases based on the second set of operating parameters 84 and past behavior of the feedback adjustment 82. As such, while the total fuel command curve 152 still exceeds the scheduled flow rate curve 186 between times t₁ and t₂ because of the adaptive adjustment 88, the total fuel command curve 152 also decreases.

At time t₂, the adaptive adjustment 88 reaches zero because, based on the second set of operating parameters 84 and past behavior of the feedback adjustment 82, the scheduled flow rate 68 adequately and effectively distributes fuel to the fuel circuit 34 without adjustment. Thus, between times t₂ and t₃, while the combustor reference temperature 54 decreases, as illustrated by the combustor reference temperature curve 144, and the scheduled flow rate 68 also decreases, as illustrated by the scheduled flow rate curve 186, the total fuel command 90 equals the scheduled flow rate 68, as illustrated by the total fuel command curve 152.

At time t₃, the combustor reference temperature curve 144 reaches a constant state. As a result, the scheduled flow rate curve 146 also reaches a constant state. The feedback adjustment curve 148 remains constant because the output parameters 70 do not change. The adaptive adjustment 88, based on the second set of operating parameters 84 and past behavior of the feedback adjustment 82, also remains constant between times t₃ and t₄.

At time t₄, the combustor reference temperature 54 increases, as illustrated by the combustor reference temperature curve 144. The scheduled flow rate 68 also increases, as illustrated by the scheduled flow rate curve 186, based on the schedule 104 and the combustor reference temperature 54. The feedback adjustment curve 148 remains constant because the output parameters 70 do not change. Between times t₄ and t₅, the adaptive adjustment 88, based on the second set of operating parameters 84 and past behavior of the feedback adjustment 82, remains constant because the scheduled flow rate 68 adequately and effectively distributes fuel to the fuel circuit 34 without adjustment.

Between times t₅ and t₆, the combustor reference temperature 54 continues to increase, as illustrated by the combustor reference temperature curve 144. The scheduled flow rate 68 also continues to increase, as illustrated by the scheduled flow rate curve 186. The feedback adjustment curve 148 remains constant because the output parameters 70 do not change. Between times t₅ and t₆, the adaptive adjustment 88 increases based on the second set of operating parameters 84 and past behavior of the feedback adjustment 82. As such, the total fuel command curve 152 exceeds the scheduled flow rate curve 186 during this time because of the adaptive adjustment 88.

At time t₆, the combustor reference temperature curve 144 reaches a constant state. As a result, the scheduled flow rate curve 146 also reaches a constant state. The feedback adjustment curve 148 remains constant during this time because there is no change in the set of output parameters 70. The adaptive adjustment curve 150 reaches a constant state based on the second set of operating parameters 84 and past behavior of the feedback adjustment 82. As such, the total fuel command curve 188 exceeds the scheduled flow rate curve 186 during this time because of the adaptive adjustment 88, while staying constant. In this manner, the controller 18 may effectively and adaptively balance between reducing regulated emission, maintaining robust combustion operation, and avoiding loss of flame or unstable combustion, without waiting for the set of output parameters to change and/or deviate from a target value.

Technical effects of the subject matter disclosed herein include, but are not limited to, systems and methods for adaptively distributing fuel to a fuel circuit of a power generation system. A controller of a power generation system may send fuel at a scheduled flow rate to a fuel circuit based on a schedule relating a flow rate and a first set of operating parameters of the power generation system. The controller may then adjust the scheduled flow rate based on a set of output parameters of the power generation system. However, because adjusting the flow rate generally occurs after the set of output parameters deviate from a target value or range, the adjustment may take some amount of time to cause the power generation system to detect a change. This may be acceptable under certain circumstances where the set of output parameters change in a longer amount of time, but may be inadequate for controlling fuel distribution during certain transient events that may benefit from faster changes to control high emissions or unstable combustion. Moreover, changes in the set of output parameters may occur as a result of supplying fuel to a fuel circuit at a scheduled flow rate, and as such, may take a finite amount of time to measure or model. The controller may determine a function relating adjusting the first flow rate and a second set of operating parameters of the power generation system. The function may enable avoiding the finite amount of time used to determine when the set of output parameters deviate from a target value or range. The controller may then send the fuel at an adapted flow rate to the fuel circuit based on the scheduled flow rate and the function. In this manner, the controller may effectively and adaptively balance between reducing regulated emission, maintaining robust combustion operation, and avoiding loss of flame or unstable combustion, without waiting for the set of output parameters to change and/or deviate from a target value.

This written description uses examples to describe the present embodiments, including the best mode, and also to enable any person skilled in the art to practice the presently disclosed embodiments, including making and using any devices or systems and performing any incorporated methods. The patentable scope of the presently disclosed embodiments is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function]..." or "step for [perform]ing [a function]...", it is intended that such elements are to be interpreted under 35 U.S.C. 112(f). However, for any claims containing elements designated in any other manner, it is intended that such elements are not to be interpreted under 35 U.S.C. 112(f).

Various aspects and embodiments of the present invention are defined by the following clauses:
1. A gas turbine system, comprising:
   a plurality of gas control valves, each gas control valve of the plurality of gas control valves coupled to a fuel supply;
   a plurality of fuel circuits, wherein each fuel circuit of the plurality of fuel circuits is coupled to a respective gas control valve of the plurality of gas control valves;
   a gas turbine configured to operate based on fuel received via the plurality of fuel circuits; and
   a processor communicatively coupled to the plurality of gas control valves, wherein the processor is configured to:
      instruct a gas control valve of the plurality of gas control valves to open to a first position, thereby sending fuel to a respective fuel circuit of the plurality of fuel circuits at a first flow rate, based at least in part on a first relationship between a flow rate of the fuel and a first set of operating parameters of the gas turbine system;
      instruct the gas control valve to open to a second position, thereby adjusting the first flow rate of the fuel to the respective fuel circuit to a second flow rate, based at least in part on a set of output parameters of the gas turbine system;
   determine a second relationship between adjusting the first flow rate and a second set of operating parameters of the gas turbine system; and instruct the gas control valve to open a third position, thereby sending the fuel to the respective fuel circuit at a third flow rate, based at least in part on the first relationship and the second relationship.
2. The gas turbine system of clause 1, comprising one or more sensors communicatively coupled to the processor, wherein the one or more sensors are configured to acquire the first set of operating parameters, the set of output parameters, the second set of operating parameters, or any combination thereof.
3. The gas turbine system of clause 1, wherein the first relationship is determined in a schedule of the flow rate based on the first set of operating parameters.
4. The gas turbine system of clause 3, wherein the processor is configured to adjust the schedule based at least in part on the second relationship.
5. The gas turbine system of clause 3, wherein the schedule determines distribution of total fuel flow to each fuel circuit of the plurality of fuel circuits.
6. The gas turbine system of clause 1, wherein the second relationship comprises a function of adjusting the first flow rate in terms of the second set of operating parameters.
7. A method comprising:
   instructing, via one or more processors, a gas control valve of a plurality of gas control valves of a gas turbine system to open to a first position, thereby sending fuel to a respective fuel circuit of a plurality of fuel circuits of the gas turbine system at a first flow rate, based at least in part on a first relationship between flow rate and a first set of operating parameters of the gas turbine system;
   instructing, via the one or more processors, the gas control valve to open to a second position, thereby adjusting the first flow rate of the fuel to the respective fuel circuit to a second flow rate, based at least in part on a set of output parameters of the gas turbine system;
   determining, via the one or more processors, a second relationship between adjusting the first flow rate and a second set of operating parameters of the gas turbine system; and
   instructing, via the one or more processors, the gas control valve to open a third position, thereby sending the fuel to the respective fuel circuit at a third flow rate, based at least in part on the first relationship and the second relationship.
8. The method of clause 7, comprising receiving, via the one or more processors, the first set of operating parameters from one or more sensors of the gas turbine system.
9. The method of clause 7, comprising receiving, via the one or more processors, the set of output parameters from one or more sensors of the gas turbine system.
10. The method of clause 7, comprising receiving, via the one or more processors, the second set of operating parameters from one or more sensors of the gas turbine system.
11. The method of clause 7, comprising instructing, via the one or more processors, the gas control valve to open to a fourth position, thereby adjusting the third flow rate of the fuel to the respective fuel circuit to a fourth flow rate, based at least in part on the set of output parameters of the gas turbine system.
12. The method of clause 11, wherein a first difference between the second flow rate and the first flow rate is greater than a second difference between the fourth flow rate and the third flow rate.
13. The method of clause 7, wherein the first relationship comprises a schedule expressing of the flow rate based on the second set of operating parameters.
14. The method of clause 13, comprising adjusting, via the one or more processors, the schedule based at least in part on the second relationship.
15. One or more tangible, non-transitory, machine-readable media comprising instructions configured to cause a processor to:
   instruct a gas control valve of a plurality of gas control valves of a gas turbine system to open to a first position, thereby sending fuel to a respective fuel circuit of a plurality of fuel circuits of the gas turbine system at a first flow rate, based at least in part on a first relationship between flow rate and a first set of operating parameters of the gas turbine system;
   instruct the gas control valve to open to a second position, thereby adjusting the first flow rate of the fuel to the respective fuel circuit to a second flow rate, based at least in part on a set of output parameters of the gas turbine system;
   determine a second relationship between adjusting the first flow rate and a second set of operating parameters of the gas turbine system; and
   instruct the gas control valve to open a third position, thereby sending the fuel to the respective fuel circuit at a third flow rate, based at least in part on the first relationship and the second relationship.
16. The one or more machine-readable media of clause 15, wherein the second set of operating parameters comprises the first set of operating parameters.
17. The one or more machine-readable media of clause 15, wherein the first set of operating parameters comprises a combustor reference temperature of the gas turbine system, one or more ambient conditions of the gas turbine system, a temperature of the gas turbine system, a pressure of the gas turbine system, a combustor airflow of the gas turbine system, an inlet temperature to a combustor of the gas turbine system, an inlet pressure to the combustor of the gas turbine system, or any combination thereof.
18. The one or more machine-readable media of clause 15, wherein the set of output parameters comprises one or more emissions of the gas turbine system, a combustor stability of the gas turbine system, or any combination thereof.
19. The one or more machine-readable media of clause 18, comprising instructions to prioritize a first output parameter of the set of output parameters over a second output parameter of the set of output parameters.
20. The one or more machine-readable media of clause 15, wherein the second set of operating parameters comprises a combuster reference temperature of the gas turbine system, one or more ambient conditions of the gas turbine system, a temperature of the gas turbine system, a pressure of the gas turbine system, a combustor airflow of the gas turbine system, an inlet temperature to a combustor of the gas turbine system, an inlet pressure to the combustor of the gas turbine system, or any combination thereof.

## Claims

1. A gas turbine system (10), comprising:
a plurality of gas control valves (32), each gas control valve (32) of the plurality of gas control valves (32) coupled to a fuel supply (30);
a plurality of fuel circuits (34), wherein each fuel circuit of the plurality of fuel circuits (34) is coupled to a respective gas control valve (32) of the plurality of gas control valves (32);
a gas turbine (16) configured to operate based on fuel received via the plurality of fuel circuits (34); and
a processor (19) communicatively coupled to the plurality of gas control valves (32), wherein the processor (19) is configured to:
instruct a gas control valve (32) of the plurality of gas control valves (32) to open to a first position, thereby sending fuel to a respective fuel circuit of the plurality of fuel circuits (34) at a first flow rate (68), based at least in part on a first relationship between a flow rate of the fuel and a first set of operating parameters (52) of the gas turbine system (10);
instruct the gas control valve (32) to open to a second position, thereby adjusting the first flow rate (68) of the fuel to the respective fuel circuit to a second flow rate, based at least in part on a set of output parameters (70) of the gas turbine system (10);
determine a second relationship between adjusting the first flow rate (68) and a second set of operating parameters (84) of the gas turbine system (10); and
instruct the gas control valve (32) to open a third position, thereby sending the fuel to the respective fuel circuit at a third flow rate (90), based at least in part on the first relationship and the second relationship.

2. The gas turbine system (10) of claim 1, comprising one or more sensors (28) communicatively coupled to the processor (19), wherein the one or more sensors (28) are configured to acquire the first set of operating parameters (52), the set of output parameters (70), the second set of operating parameters (84), or any combination thereof.

3. The gas turbine system (10) of claim 1, wherein the first relationship is determined in a schedule (104) of the flow rate based on the first set of operating parameters (52).

4. The gas turbine system (10) of claim 3, wherein the processor (19) is configured to adjust the schedule (104) based at least in part on the second relationship.

5. The gas turbine system (10) of claim 3, wherein the schedule (104) determines distribution of total fuel flow to each fuel circuit of the plurality of fuel circuits (34).

6. The gas turbine system (10) of claim 1, wherein the second relationship comprises a function of adjusting the first flow rate (68) in terms of the second set of operating parameters (84).

7. A method comprising:
instructing, via one or more processors (19), a gas control valve (32) of a plurality of gas control valves (32) of a gas turbine system (10) to open to a first position, thereby sending fuel to a respective fuel circuit (34) of a plurality of fuel circuits (34) of the gas turbine system (10) at a first flow rate (68), based at least in part on a first relationship between flow rate and a first set of operating parameters (52) of the gas turbine system (10);
instructing, via the one or more processors (19), the gas control valve (32) to open to a second position, thereby adjusting the first flow rate (68) of the fuel to the respective fuel circuit to a second flow rate, based at least in part on a set of output parameters (70) of the gas turbine system (10);
determining, via the one or more processors (19), a second relationship between adjusting the first flow rate (68) and a second set of operating parameters (84) of the gas turbine system (10); and
instructing, via the one or more processors (19), the gas control valve (32) to open a third position, thereby sending the fuel to the respective fuel circuit at a third flow rate (90), based at least in part on the first relationship and the second relationship.

8. The method of claim 7, comprising receiving, via the one or more processors (19), the first set of operating parameters (52) from one or more sensors (28) of the gas turbine system (10).

9. The method of claim 7, comprising receiving, via the one or more processors (19), the set of output parameters (70) from one or more sensors (28) of the gas turbine system (10).

10. The method of claim 7, comprising receiving, via the one or more processors (19), the second set of operating parameters (84) from one or more sensors (28) of the gas turbine system (10).

11. The method of claim 7, comprising instructing, via the one or more processors (19), the gas control valve (32) to open to a fourth position, thereby adjusting the third flow rate (90) of the fuel to the respective fuel circuit to a fourth flow rate, based at least in part on the set of output parameters (70) of the gas turbine system (10).

12. The method of claim 11, wherein a first difference between the second flow rate and the first flow rate (68) is greater than a second difference between the fourth flow rate and the third flow rate (90).

13. The method of claim 7, wherein the first relationship comprises a schedule (104) expressing of the flow rate based on the second set of operating parameters (84).

14. The method of claim 13, comprising adjusting, via the one or more processors (19), the schedule (104) based at least in part on the second relationship.

15. The method of claim 7, wherein the second set of operating parameters (84) comprises the first set of operating parameters (52).
